# EUROPÄISCHE PATENTSCHRIFT

(11) **EP 2 945 323 B1**
(45) Veröffentlichungstag und Bekanntmachung des Hinweises auf die Patenterteilung: **13.11.2019**
(21) Anmeldenummer: 15001454.6
(22) Anmeldetag: 15.05.2015
(51) Int. Cl.: H04L 12/58

(54) **VERFAHREN FÜR EINEN MAIL TRANSFER AGENT ZUM ÜBERTRAGEN EINER ELEKTRONISCHEN NACHRICHT VON EINEM SENDER AN EINEN EMPFÄNGER**
METHOD FOR A MAIL TRANSFER AGENT FOR TRANSMITTING AN ELECTRONIC MESSAGE FROM A SENDER TO A RECEIVER
PROCÉDÉ POUR UN AGENT DE TRANSFERT DE MESSAGES DESTINÉ À TRANSMETTRE UN MESSAGE ÉLECTRONIQUE D'UN EXPÉDITEUR À UN DESTINATAIRE

(30) Priorität: 15.05.2014 DE 102014209272; 15.08.2014 DE 102014216296
(43) Veröffentlichungstag der Anmeldung: 18.11.2015
(73) Patentinhaber: 1&1 Internet SE, 56410 Montabaur (DE); Deutsche Telekom AG, 53113 Bonn (DE); STRATO AG, 10587 Berlin (DE)
(72) Erfinder: Thal, Andreas, 76135 Karlsruhe (DE); Umbach, Klaus, 76135 Karlsruhe (DE); Laber, Markus, 76135 Karlsruhe (DE); Boos, Elmar, 97906 Fellbach (DE); Kunkel, Florian, 64397 Modautal (DE); Deigner, Matthias, 67454 Haßloch (DE); Martin, Tobias, 35466 Rabenau (DE); Wehrenberg, Claude, 30826 Garbsen (DE); Hausdorff, Michael, 64289 Darmstadt (DE); Lehmann, Steffen, 16321 Bernau bei Berlin (DE)
(74) Vertreter: DTS Patent- und Rechtsanwälte Schnekenbühl und Partner mbB

(56) Entgegenhaltungen:
- US-A1- 2008 114 833
- US-A1- 2010 287 372
- US-B1- 8 171 085

## Beschreibung

Die Erfindung betrifft ein Verfahren für einen Mail Transfer Agent zum Übertragen einer elektronischen Nachricht von einem Sender an einen Empfänger.

### Hintergrund der Erfindung

In einer zunehmend kommunikationsbasierten Welt ist die Sicherheit der Kommunikation ein wichtiges Element.

Dabei ist insbesondere die asynchrone Kommunikation, wie sie z.B. durch Email-Systeme bereitgestellt werden immer noch einer der Hauptträger der Kommunikation, wobei die jeweiligen elektronischen Nachrichten mittlerweile über einen erheblichen Gestaltungsspielraum in Form des tatsächlichen Aussehens und der Möglichkeit des Beifügens von einer oder mehreren Anlagen verfügen.

Zwar sind aus dem Stand der Technik Systeme bekannt, die die Verschlüsselung und/oder die gesicherte Übertragung von Emails erlauben, jedoch weisen diese Systeme ihre jeweiligen Probleme auf, von denen einige nachfolgend kurz erläutert werden sollen.

So ist es z.B. möglich Emails zwischen einem Sender und einem sogenannten Mail Transfer Agent (MTA) bei einem Provider als auch zwischen verschiedenen Mail Transfer Agents (MTA) ein und desselben Providers oder zwischen verschiedenen Providern mittels Transport Layer Security (TLS) zu übertragen. Allerdings muss festgestellt werden, dass diese verschlüsselte Weitergabe jeweils nur zwischen den jeweiligen unmittelbaren Kommunikationspartnern möglich war und somit für einen Versender es nicht möglich ist sicher zu sein, dass die elektronische Nachricht vollständig über eine gesicherte Verbindung versandt wurde. Insbesondere ist dabei festzustellen, dass hier auch unterschiedlich starke Sicherungselemente zum Einsatz kamen, sodass im Zweifelsfall auch eine schlecht gesicherte oder ungesicherte Zwischenübermittlung zu einem Verlust an Sicherheit führt.

Neben der lückenhaften Verbreitung von hochgesicherten TLS-Verbindungen weist die TLS-Technik auch eine Anfälligkeit gegenüber sogenannten Man-in-the-middle Angriffen auf. Zudem kann die Herkunft der Server-Zertifikate nicht hundertprozentig sicher ermittelt werden und Mail Transfer Agents können mittels sogenanntem DNS Cache-Poisoning in die Irre geführt werden, sodass sie Mails an Server von Angreifern ausgeliefert werden.

Wegen dieser konzeptionellen Probleme, die auch zu einer schlechten Verbreitung führen, wurden in der Vergangenheit Anstrengungen unternommen, die Probleme zu lösen. Beispielsweise wurden in dem RFC 6698 "DNS Based Authentication of Named Entities" (DANE) ein Verfahren vorgestellt, welches die Mängel zum Teil beseitigt und dabei vollautomatisch ablaufen kann.

Allerdings ist hierbei ein erheblicher Aufwand zu treiben, da nunmehr eine durchgängige DNSSEC Infrastruktur, also ein kryptografisch abgesichertes Domain Name System (DNS) bereitgestellt werden müsste.

Ein Verfahren mit den Merkmalen des Oberbegriffs des Anspruchs ist aus der US2008/114833 A1 bekannt.

Um die Verbindungssicherheit des aus der US2008/114833 A1 bekannten gattungsgemäßen Verfahrens zu verbessern, ist es aus der US8171085 A1 bekannt, die Auswertung der über die gesicherte Übertragung übertragenen Zertifikatsinformation einen Abgleich der Zertifikatsinformation mit einer lokal gespeicherten Zuordnung von Empfangsdomain und zugehörigen zuvor gespeicherten Zertifikatsinformationen aufweist, und falls der Abgleich erfolgreich war, die elektronische Nachricht (Mail) an den zuständigen Posteingangsserver (Recipient-MX) gesendet wird.
Ausgehend von dieser Situation ist es Aufgabe der Erfindung, ein Verfahren für einen Mail Transfer Agent zum Übertragen einer elektronischen Nachricht von einem Sender an einen Empfänger zur Verfügung zu stellen, das es ermöglicht, mit moderatem Mehraufwand die oben aufgezeigten Probleme zu lösen.

Die Aufgabe wird gelöst, durch ein Verfahren gemäß Anspruch 1. Weitere vorteilhafte Ausgestaltungen sind insbesondere Gegenstand der abhängigen Ansprüche. Nachfolgend wird die Erfindung näher unter Bezug auf die Figuren erläutert. In diesen zeigt:
Fig. 1 eine beispielhafte Netzstruktur, in der die Erfindung Verwendung finden kann, und

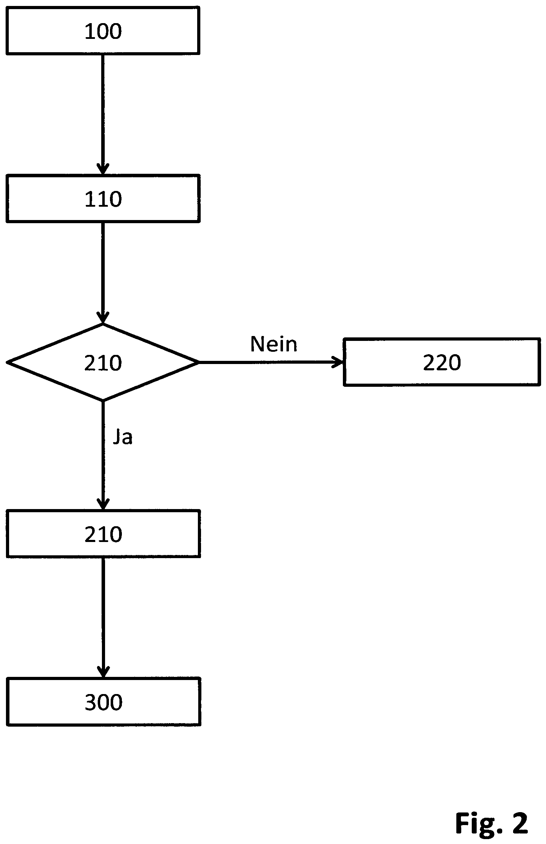

Fig. 2 einen beispielhaften schematischen Ablauf gemäß unterschiedlicher Ausführungsformen der Erfindung.

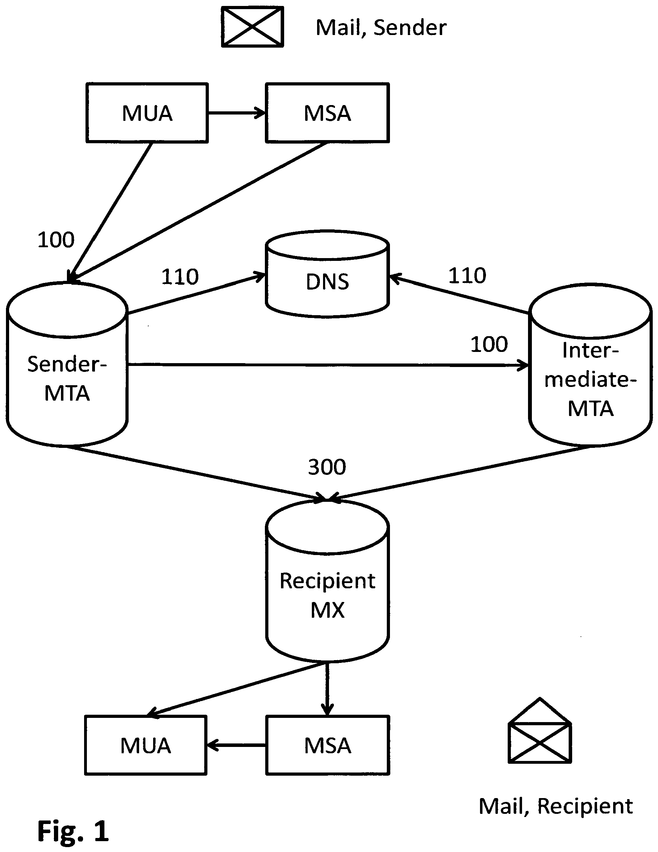

In Figur 1 ist eine beispielhafte Netzstruktur, in der die Erfindung Verwendung finden kann, dargestellt.

Dabei erhält ein Mail Transfer Agent, z.B. der Sender-MTA, eine elektronische Nachricht "Mail", welche in Figur 1 als geschlossener Briefsymbol dargestellt ist, von einem Sender über einen Mail User Agent, MUA, wie z.B. einem herkömmlichen Email-Client, entweder direkt oder unter Zuhilfenahme eines Mail Submission Agents, MSA, wie er z.B. bei Firmen zum Einsatz kommt, zur Versendung an einen Empfänger, Recipient zugestellt. Dies geschieht in einem ersten Schritt 100. Ohne Beschränkung der Allgemeinheit kann der Mail Transfer Agent die Nachricht auch von einer mobilen App, einem Web-Mailer oder dergleichen erhalten.

Dabei weist die elektronische Nachricht Mail notwendigerweise einen Empfänger Recipient auf, der üblicherweise einen Empfängernamen und eine Empfängerdomain aufweist.

Beispielsweise könnte der Sender der Nachricht Mail ein Benutzer alice@provider1.de sein, wobei der Name des Senders "Alice" und die Senderdomain "provider1.de" ist. Der Empfänger könnte der Nachricht Mail nun ein Benutzer bob@provider2.net sein, wobei der Name des Empfängers "Bob" und die Empfängerdomain "provider2.net" ist. Es versteht sich natürlich, dass die Empfängerdomain auch gleich der Senderdomain sein kann.

Der Mail Transfer Agent Sender-MTA kann nun in einem weiteren Schritt 110 auf Basis der Empfängerdomain der empfangenen elektronischen Nachricht Mail einen für die

Empfängerdomain zuständigen Posteingangsserver Recipient-MX ermitteln. Dieser Posteingangsserver kann beispielsweise in einer lokalen Datei gespeichert sein oder aber von einem Verzeichnisdienst wie z.B. dem DNS abgerufen werden. Beispielsweise kann eine solche optionale Abfrage 110 an einen sogenannten Domain Network Service gerichtet werden, in dem für verschiedenste Zwecke Serveradressen gespeichert sind.

Beispielsweise wird der Eintrag für einen Server, der eingehende Email für eine bestimmte Domain entgegennimmt, als MX oder Mail eXchange-Record bezeichnet. Ist ein entsprechender zuständiger Posteingangsserver bestimmt, kann nun eine Verbindung zu diesem zuständigen Posteingangsservers Recipient-MX aufgebaut werden. Hierzu wird vorzugsweise ein verbindungsorientiertes Netzwerkprotokoll, wie z.B. das Transmission Control Protocol, TCP, verwendet.

Über dieses Transportprotokoll, wird nun eine gesicherte Übertragung, beispielsweise mittels Transport Layer Security TLS, in einem weiteren Schritt 210 angefordert und die hierfür von dem Recipient-MX erhaltenen Zertifikatsinformationen können nun ausgewertet werden.

Dabei kann nun zunächst bei der Auswertung der über die gesicherten Übertragung (TLS) übertragenen Zertifikatsinformation ein Abgleich des Fingerprints der Zertifikatsinformation mit einer lokal gespeicherten Zuordnung von Empfangsdomain und zugehörigen zuvor gespeicherten Zertifikatsinformationen vorgenommen werden. Ferner kann eine Prüfung gegen eine Public Key Infrastruktur (PKI), z.B. X.509 erfolgen. Hierzu kann der Sender-MTA die zuvor gespeicherten Informationen über einen anderen Austauschmechanismus erhalten haben oder aber diese sind lokal in einer Datei gespeichert.

Falls der Abgleich erfolgreich war, kann nun in einem weiteren Schritt 300 die elektronische Nachricht Mail an den zuständigen Posteingangsserver Recipient-MX gesendet werden.

Mit der vorbeschriebenen Erfindung ist es nunmehr möglich, eine gesicherte Kommunikation zumindest zwischen dem Mail Transfer Agent und dem Recipient MX herzustellen. Sind diese so eingerichtet, dass jeweils eine elektronische Nachrichtenzustellung von bzw. an einen Benutzer nur über entsprechende gesicherte Verbindungen zur Verfügung gestellt wird, kann eine zuverlässige Infrastruktur bereitgestellt werden.

Ohne weiteres können in den Abgleichschritt auch weitere Schritte integriert sein. So kann beispielsweise vorab geprüft werden, ob die Empfangsdomain eine entsprechende Infrastruktur überhaupt zur Verfügung stellt. Dies kann z.B. bei vorausgegangen Verbindungsversuchen ermittelt und gespeichert worden sein. Weiterhin kann auch an Hand einer Liste vertrauenswürdiger Empfängerdomains zunächst überprüft werden, ob die MX Einträge der Empfangsdomain vorgegebene funktionalen und/oder nicht funktionalen Kriterien erfüllen, bevor ein weiterer Abgleich initiiert wird. Ein nicht funktionales Merkmal kann z.B. sein, dass die Mailinfrastruktur innerhalb sich innerhalb eines definierten juristischen Zuständigkeitsbereichs steht. Funktionale Merkmale können z.B. Verschlüsselungsqualität, Verwendung nur von als sicher angesehenen Algorithmen für Vertraulichkeit, Integrität und Authentizität sein. Die Zuordnung kann mittels einem verteilten Verzeichnisdienst (z.B. DNS) erfolgen oder mittels eines anderen Services erfolgen (z.B. einem Webservice, oder eine von einem Webserver bereitgestellte Datei), der für die erfindungsgemäße Umsetzung benötigte Information über die Mailinfrastruktur bereitstellt.

Besonders vorteilhaft kann z.B. die Zuordnung von Empfangsdomain und zugehörigen Zertifikatsinformation in einem JSON Format oder einer anderen formalen Beschreibungssprache wie z.B. XML erfolgen. Hierdurch kann z.B. der Austausch der entsprechenden Informationen zwischen den unterschiedlichen Mail Transfer Agents erheblich vereinfacht und automatisiert werden.

Weiterhin kann als weiterer Schutzmechanismus vorgesehen werden, dass falls der Abgleich nicht erfolgreich war, die elektronischen Nachricht Mail nicht an den zuständigen Posteingangsserver Recipient-MX versandt wird. Hierdurch kann vermieden werden, dass ein Mischbetrieb von fallweise sicherer und unsicherer Kommunikation bereitgestellt wird und somit das Vertrauen in eine sichere Kommunikation untergraben wird.

Weiterhin kann auch vorgesehen sein, dass falls der Abgleich nicht erfolgreich war, der Sender der elektronischen Nachricht Mail 230 eine - beispielsweise im SMTP Protokoll standardisierte - Rückmeldung z.B. Code 450 "Insuficient security or privacy level" über den nicht erfolgten Versand und gegebenenfalls auch über den Grund des Nichtversands erhält. Hierdurch kann der Sender nun z.B. selbst entscheiden, ob er einen anderen Weg wählt, um seine elektronische Nachricht an den Empfänger zu übermitteln. Diese Benachrichtigung kann sowohl als Fehlermeldung als auch in einem interaktiven Austausch vor dem eigentlichen Versand stattfinden.

Weiterhin kann auch die Ermittlung 110 eines für die Empfängerdomain zuständigen Posteingangsservers Recipient-MX eine gesicherte Domain Name Service (DNSsec) aufweisen. Hierdurch können z.B. insbesondere in Verbindung mit DANE (DNS-Based Authentication of Named Entities), Manipulationen auf das DNS-System erkannt bzw. erschwert werden.

Ein noch höheres Maß an Sicherheit kann erreicht werden, indem Zertifikatsinformation welche in dem für die TLS Übertragung genutzten Zertifikat enthalten sind verwendet werden, um weitere Attribute zu überprüfen, z.B. den Hostnamen des Recipient oder Sender MX. Eine noch weitergehende Sicherheit kann dadurch erreicht werden, dass die eingesetzten Protokolle und Algorithmen das kryptografische Prinzip der Folgenlosigkeit berücksichtigen, z.B. PFS Perfect Forward Secrecy erfüllen.

Bei Perfect Forward Secrecy wird der geheime Sitzungsschlüssel zwischen den jeweiligen Kommunikationspartnern nicht übertragen, sondern z.B. im sogenannten Diffie-Hellman-Verfahren (DH) ausgehandelt. Nach der Sitzung, also dem Ende des Kommunikationsvorgangs, wird er zerstört. Abgeschlossene Sitzungen können somit im Nachhinein nicht mehr entschlüsselt werden.

Erfindungsgemäß tauschen die beteiligten Mail Transfer Agent Sender-MTA, Intermediate-MTA und Recipient-MX Zertifikatsinformationen zur lokalen Speicherung und Abgleich über eine weitere gesicherte Verbindung aus. Hierdurch kann ein Netz von vertrauenswürdigen Mail Transfer Agents unkompliziert aufgebaut und administriert werden.

Von besonderem Vorteil ist dabei, wenn den ausgetauschten Zertifikatsinformationen Zeitstempel zugeordnet sind. Hierdurch kann z.B. an Hand des Zeitstempels eine Gültigkeitsdauer bestimmt werden und so z.B. nach Ablauf eines bestimmten Intervalls eine Aktualisierung angestoßen werden, und/oder der Zeitstempel kann auch zur Validierung der ausgetauschten Zertifikatsinformationen dienen.

Somit erlaubt es die Erfindung, eine authentifizierte TLS Verbindung zwischen Mailservern Sender-MTA, Intermediate-MTA und Recipient MX zu ermöglichen, ohne auf eine DNSSEC Infrastruktur zurückgreifen zu müssen. Im Besonderen kann auch die Authentizität von Gegenstellen im elektronischen Mailverkehr gewährleistet werden. Dabei wird ein föderaler Ansatz zur Verfügung gestellt, der die Integration weiterer Teilnehmer in einem E-Mail-Verbund ermöglicht. Der föderale Ansatz entsteht, in dem alle Teilnehmer in einer im gesamten Verbund verwendeten Liste eingetragen sind, die zentral bereitgestellt wird oder von einer Organisation wie z.B. der IANA (Internet Assigned Numbers Authority) bereitgestellt wird.

Jeder in der Teilnehmerliste aufgeführte Teilnehmer, z.B. provider1.de, provider2.net, betreibt dabei mindestens einen Posteingangsserver Sender-MTA und kann Infrastrukturlisten erzeugen, in denen er beispielsweise im JSON-Format seine MailInfrastruktur beschreibt. Zu den Angaben können beispielsweise Domainnamen, IP-Adressen, SSL-Zertifikatsinformation und Rollen der beteiligten Server gehören. Die Infrastrukturlisten können seitens der Teilnehmer, d.h. der Domain-Betreiber, untereinander ausgetauscht werden und diese Teilnehmer können die Konsistenz auf unterschiedlichsten Wegen prüfen. Hierdurch können Manipulation der Listen erheblich erschwert, wenn nicht sogar unmöglich gemacht werden.

Dabei können die Listen auf unterschiedlichste Art erstellt werden: Beispielsweise können die Listen manuell, automatisch oder in einer Mischform erstellt werden. Weiterhin können die Infrastrukturdateien automatisiert geprüft werden. Dabei kann z.B. die syntaktische Korrektheit geprüft werden und/oder die Übereinstimmung von IP-Adressen und Hostnamen übereinstimmen und/oder SSL-Zertifikate können verifiziert werden.

Die Verifizierung prüft z.B. ob ein SSL Zertifikat von einer bestimmten Certificate Authority (CA) herausgegeben worden ist, die als vertrauenswürdig gilt. Dabei kann zudem vorgesehen sein, dass nur geprüften Listen zu den Teilnehmern des Verbunds übertragen werden.

Beim Mail-Versand und -Empfang können nun die Mailserver Sender-MTA, Intermediate-MTA und Recipient MX der Teilnehmer des Verbunds die Client- und Server-Zertifikate zusätzlich gegen die herausgebende CA prüfen, sowie gegen die Infrastrukturliste.

Sollten dabei Inkonsistenzen auffallen, können die Mailserver Sender-MTA, Intermediate-MTA und Recipient MX den Empfang oder Versand der betreffenden Mail ablehnen gegebenenfalls unter Angabe eines Grundes für den Nichtversand und/oder die erkannte(n) Inkonsistenz(en) in ein Logdatei schreiben und/oder den Administrator der Mailserver oder einen Verwalter des Verbundes informieren.

Zusätzlich kann vorgesehen sein, dass z.B. den unterschiedlichen Zugangs-Mechanismen, wie z.B. ein Mail User Agent MUA, oder einem Web-Mailer, einer App für mobile Plattformen den Nutzer informieren, ob ihre Nachricht nach den Sicherheitskriterien des Verbunds zugestellt werden kann.

Falls eine Zustellung im Verbund möglich ist, kann z.B. ein entsprechend ausgelegter Mail User Agent eine entsprechende Rückmeldung geben, z.B. über ein grünes Häkchen, das in der Adress-Zeile eingeblendet wird. Diese Prüfung kann ebenfalls auf einem Vergleich der DNS-Informationen mit den Inhalten der Infrastrukturlisten basieren.

Obwohl vorstehend der Vorgang zunächst nur für einen Sender-MTA beschreiben ist, kann das Verfahren in gleicher Weise auch von einem zwischengeschaltetem Intermediate-MTA vorgenommen werden.

Obwohl vorstehend der Vorgang für einen Sender-MTA beschreiben ist, könnte er in analoger Weise von einem Mail User Agent MUA oder einem Mail Submission Agent MSA durchgeführt werden.

Ohne weiteres können die zuvor beschriebenen Ausführungsformen der Erfindung auch als Software verkörpert sein. Insbesondere ist es möglich die Verfahrensschritte als Datenfolge aufweisend Anweisungen zur Einrichtung eines Computers zur Ausführung eines der Verfahren auszugestalten und über körperliche Medien, wie z.B. Daten-DVD, oder unkörperliche Medien, wie z.B. die drahtlose oder drahtgebundene Übertragung über elektromagnetische Schwingungen, zu verbreiten.

Natürlich kann die zuvor beschriebene Erfindung auch auf in einer Vorrichtung, wie z.B. einem mit einem Netzwerk verbundenen Rechner, verkörpert sein.

## Patentansprüche

1. Verfahren für einen Mail Transfer Agent (Sender-MTA, Intermediate MTA) zum Übertragen einer elektronischen Nachricht (Mail) von einem Sender (Sender) an einen Mail User Agent (MUA) oder Mail Submission Agent (MSA) als Empfänger (Recipient), aufweisend:
• Empfangen (100) der elektronischen Nachricht (Mail), wobei die elektronische Nachricht (Mail) eine Empfängeradresse mit einer Empfängerdomain aufweist,
• basierend auf der Empfängerdomain der empfangenen elektronischen Nachricht Ermitteln (110) eines für die Empfängerdomain zuständigen Posteingangsservers (Recipient-MX),
• Weiterleiten der empfangenen elektronischen Nachricht an den für die Empfängerdomain zuständigen Posteingangsserver (Recipient-MX), wobei das Weiterleiten die Schritte aufweist von:
• Aufbauen einer Verbindung mittels eines Netzwerkprotokolls zu dem zuständigen Posteingangsservers (Recipient-MX),
• Anfordern (200) einer gesicherten Übertragung über die aufgebaute Verbindung und Auswerten (210) von über die gesicherten Übertragung übertragenen Zertifikatsinformation,
**dadurch gekennzeichnet, dass**
die Auswertung der über die gesicherte Übertragung übertragenen Zertifikatsinformation einen Abgleich der Zertifikatsinformation mit einer lokal gespeicherten Zuordnung von Empfangsdomain und zugehörigen zuvor gespeicherten Zertifikatsinformationen aufweist, und falls der Abgleich erfolgreich war, die elektronische Nachricht (Mail) an den zuständigen Posteingangsserver (Recipient-MX) gesendet wird, und
die beteiligten Mail Transfer Agents (Sender-MTA, Intermediate-MTA) Zertifikatsinformationen zur lokalen Speicherung und Abgleich über eine weitere gesicherte Verbindung austauschen.

2. Verfahren nach Anspruch 1, wobei die Zuordnung von Empfangsdomain und zugehörigen Zertifikatsinformation in einem JSON Format oder einem XML-Format erfolgt.

3. Verfahren nach einem der vorhergehenden Ansprüche, **dadurch gekennzeichnet, dass** falls der Abgleich nicht erfolgreich war (220), die elektronischen Nachricht (Mail) nicht an den zuständigen Posteingangsserver (Recipient-MX) versandt wird.

4. Verfahren nach Anspruch 3, **dadurch gekennzeichnet, dass** dem Sender vor dem Versand die Möglichkeit des sicheren Versandes rückgemeldet wird.

5. Verfahren nach einem der vorhergehenden Ansprüche, **dadurch gekennzeichnet, dass** falls der Abgleich nicht erfolgreich war, der Sender der elektronischen Nachricht (Mail) eine Rückmeldung (230) über den nicht erfolgten Versand und gegebenenfalls auch über den Grund des Nichtversands erhält.

6. Verfahren nach einem der vorhergehenden Ansprüche, **dadurch gekennzeichnet, dass** der Mail Transfer Agent (Intermediate-MTA), die elektronische Nachricht (Mail) von einem anderen Mail Transfer Agent (Sender-MTA), einem Mail Submission Agent (MSA) oder einen Mail User Agent (MUA) erhält.

7. Verfahren nach einem der vorhergehenden Ansprüche, **dadurch gekennzeichnet, dass** die Ermittlung (110) eines für die Empfängerdomain zuständigen Posteingangsservers (Recipient-MX) einen gesicherten Domain Name Service (DNSsec) aufweist.

8. Verfahren nach einem der vorhergehenden Ansprüche, **dadurch gekennzeichnet, dass** die die Auswertung der über die gesicherten Übertragung übertragenen Zertifikatsinformation weiterhin den Schritt des Abgleichs von IP Adressen des zuständigen Posteingangsservers (IP-Recipient-MX) mit einer lokal gespeicherten physikalischen Adressaten aufweist.

9. Verfahren nach einem der vorhergehenden Ansprüche, **dadurch gekennzeichnet, dass** das Anfordern einer in der Transportschicht gesicherten Übertragung über die aufgebaute Verbindung mittels Diffie-Hellmann-Verfahren Perfect Forward Secrecy ermöglicht.

10. Verfahren nach Anspruch 1, **dadurch gekennzeichnet, dass** den ausgetauschten Zertifikatsinformationen Zeitstempel zugeordnet sind.

11. Datenfolge umfassend Befehle, die bei der Ausführung des Programms durch einen Computer diesen veranlassen, die Schritte eines Verfahrens nach einem der vorhergehenden Ansprüche auszuführen.

12. System aufweisend einen Mail Transfer Agent (Sender-MTA, Intermediate MTA) zum Übertragen einer elektronischen Nachricht (Mail) von einem Sender (Sender) an einen Mail User Agent (MUA) oder Mail Submission Agent (MSA) als Empfänger (Recipient) der elektronischen Nachricht (Mail), wobei die elektronische Nachricht (Mail) eine Empfängeradresse mit einer Empfängerdomain aufweist, und einen für die Empfängerdomain zuständigen Posteingangsserver (Recipient-MX), wobei das System Mittel zur Ausführung aller Schritte des Verfahrens nach einem der vorhergehenden Ansprüche 1 bis 10 aufweist.

## Claims

1. A method for a mail transfer agent (sender MTA, intermediate MTA) for transmitting an electronic message (mail) from a sender to a mail user agent (MUA) or mail submission agent (MSA) as a recipient, comprising:
• receiving (100) the electronic message (mail), the electronic message (mail) comprising a recipient address with a recipient domain,
• based on the recipient domain of the received electronic message, determining (110) an incoming mail server (recipient MX) responsible for the recipient domain,
• forwarding the received electronic message to the incoming mail server (recipient MX) responsible for the recipient domain, the forwarding comprising the following steps:
• establishing a connection to the responsible incoming mail server (recipient MX) using a network protocol,
• requesting (200) secure transmission via the established connection and evaluating (210) certificate information transmitted via the secure transmission, **characterized in that**
the evaluation of the certificate information transmitted via the secure transmission involves a comparison of the certificate information with a locally stored assignment of the recipient domain and associated, previously stored certificate information, and, if the comparison was successful, the electronic message (mail) is sent to the responsible incoming mail server (recipient MX), and
the mail transfer agents involved (sender MTA, intermediate MTA) exchange certificate information for local storage and comparison via another secure connection.

2. The method according to claim 1, wherein the assignment of the recipient domain and the associated certificate information is made in a JSON format or an XML format.

3. The method according to any of the preceding claims, **characterized in that**, if the comparison was not successful (220), the electronic message (mail) is not sent to the responsible incoming mail server (recipient MX).

4. The method according to claim 3, **characterized in that** the possibility of secure dispatch is reported back to the sender before dispatch.

5. The method according to any of the preceding claims, **characterized in that**, if the comparison was not successful, the sender of the electronic message (mail) receives an acknowledgement (230) of the dispatch failure and, if appropriate, of the reason for the dispatch failure.

6. The method according to any of the preceding claims, **characterized in that** the mail transfer agent (intermediate MTA) receives the electronic message (mail) from another mail transfer agent (sender MTA), a mail submission agent (MSA) or a mail user agent (MUA).

7. The method according to any of the preceding claims, **characterized in that** the determination (110) of an incoming mail server (recipient MX) responsible for the recipient domain involves a secured domain name service (DNSsec).

8. The method according to any of the preceding claims, **characterized in that** the evaluation of the certificate information transmitted via the secure transmission further comprises the step of comparing IP addresses of the responsible incoming mail server (IP recipient MX) with a locally stored physical addressee.

9. The method according to any of the preceding claims, **characterized in that** the request for a transmission secured in the transport layer via the established connection by means of the Diffie-Hellmann method enables Perfect Forward Secrecy.

10. The method according to claim 1, **characterized in that** time stamps are assigned to the exchanged certificate information.

11. A data sequence comprising instructions which, when the program is executed by a computer, cause the computer to execute the steps of a method according to any of the preceding claims.

12. A system comprising a mall transfer agent (sender MTA, intermediate MTA) for transmitting an electronic message (mail) from a sender to a mail user agent (MUA) or mail submission agent (MSA) as a recipient of the electronic message (mail), the electronic message (mail) comprising a recipient address with a recipient domain, and an incoming mail server (recipient MX) responsible for the recipient domain, the system comprising means for carrying out all the steps of the method according to any of the preceding claims 1 to 10.

## Revendications

1. Procédé pour un agent de transfert de message (Mail Transfer Agent en anglais) (MTA expéditeur (Sender-MTA en anglais), MTA intermédiaire (Intermediate MTA)), destiné à transmettre un message électronique (Mail en anglais) d'un expéditeur (Sender en anglais) à un client de messagerie (MUA, Mail User Agent en anglais) ou agent de soumission de message (MSA, Mail Submission Agent en anglais) servant de destinataire (Recipient en anglais), comportant :
• la réception (100) du message électronique (Mail), le message électronique (Mail) comportant une adresse de destinataire avec un domaine du destinataire ;
• sur la base du domaine du destinataire du message électronique reçu, détermination (110) d'un serveur entrant de courrier (destinataire d'échange de mail, Recipient-MX en anglais) en charge du domaine du destinataire ;
• transfert du message électronique reçu au serveur entrant de courrier (Recipient-MX) en charge du domaine du destinataire, le transfert présentant les étapes suivantes :
• l'établissement d'une liaison, à l'aide d'un protocole de réseau, avec le serveur entrant de courrier (Recipient-MX) concerné ;
• la demande (200) d'une transmission sécurisée via la liaison établie et l'analyse (210) des informations de certificat transmises via la transmission sécurisée ;
**caractérisé en ce que** :
l'analyse des informations de certificat transmises via la transmission sécurisée comporte une comparaison des informations de certificat avec une association mémorisée localement du domaine du destinataire et des informations de certificat associées précédemment mémorisées et en cas de comparaison réussie, le message électronique (Mail) est envoyé au serveur entrant de courrier (Recipient-MX) correspondant ; et
les agents de transfert de message concernés (Sender-MTA, Intermediate-MTA) échangent des informations de certificat pour une mise en mémoire locale et une comparaison via une autre liaison sécurisée.

2. Procédé selon la revendication 1, l'association du domaine du destinataire et des informations de certificat associées s'effectue au format JSON ou au format XML.

3. Procédé selon l'une quelconque des revendications précédentes, **caractérisé en ce qu'**en cas de comparaison non réussie (220), le message électronique (Mail) n'est pas envoyé au serveur entrant de courrier (Recipient-MX) correspondant.

4. Procédé selon la revendication 3, **caractérisé en ce que** la possibilité d'envoi sécurisé est donnée à l'expéditeur avant l'envoi.

5. Procédé selon l'une quelconque des revendications précédentes, **caractérisé en ce qu'**en cas de comparaison non réussie, l'expéditeur du message électronique (Mail) reçoit un message de retour (230) sur l'envoi non réussi et le cas échéant également sur la raison de l'échec de l'envoi.

6. Procédé selon l'une quelconque des revendications précédentes, **caractérisé en ce que** l'agent de transfert de message (Intermediate-MTA) reçoit le message électronique (Mail) par un autre agent de transfert de message (Sender-MTA), un agent de soumission de message (MSA) ou un client de messagerie (MUA).

7. Procédé selon l'une quelconque des revendications précédentes, **caractérisé en ce que** la détermination (110) d'un serveur entrant de courrier (Recipient-MX) en charge du domaine du destinataire comporte un nom de domaine (DNSsec, Domain Name Service en anglais) sécurisé.

8. Procédé selon l'une quelconque des revendications précédentes, **caractérisé en ce que** l'analyse des informations de certificat transmises via la transmission sécurisée comporte en outre l'étape de comparaison des adresses IP du serveur entrant de courrier (IP-Recipient-MX) concerné avec un destinataire physique mémorisé localement.

9. Procédé selon l'une quelconque des revendications précédentes, **caractérisé en ce que** la demande de transmission sécurisée dans la couche de transport via la liaison établie permet une confidentialité de transmission parfaite (Perfect Forward Secrecy en anglais) à l'aide du procédé Diffie-Hellmann.

10. Procédé selon la revendication 1, **caractérisé en ce que** des estampilles temporelles sont associées aux informations de certificat échangées.

11. Séquence de données comprenant des ordres autorisant l'ordinateur, lors de l'exécution du programme par celui-ci, à exécuter les étapes d'un procédé selon l'une quelconque des revendications précédentes.

12. Système comportant un agent de transfert de message (Sender-MTA, Intermediate MTA) destiné à transmettre un message électronique (Mail) d'un expéditeur (Sender) à un client de messagerie (MUA) ou agent de soumission de message (MSA) comme destinataire (Recipient) du message électronique (Mail), le message électronique (Mail) comportant une adresse de destinataire avec un domaine du destinataire et un serveur entrant de courrier (Recipient-MX) en charge du domaine du destinataire, le système comportant des moyens pour mettre en œuvre toutes les étapes du procédé selon l'une quelconque des revendications 1 à 10.
